(19) Europäisches Patentamt / European Patent Office / Office européen des brevets

(11) **EP 2 680 263 B1**

(12) **FASCICULE DE BREVET EUROPEEN**

(45) Date de publication et mention
de la délivrance du brevet:
**09.03.2016 Bulletin 2016/10**

(51) Int Cl.:
*G10L 25/21* (2013.01)     *H04B 3/23* (2006.01)
*H04M 9/08* (2006.01)

(21) Numéro de dépôt: **13174005.2**

(22) Date de dépôt: **27.06.2013**

(54) **Estimation de couplage à faible complexité**

Bewertung einer Kupplung geringer Komplexität

Estimation of low complexity coupling

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.06.2012 FR 1256131**

(43) Date de publication de la demande:
**01.01.2014 Bulletin 2014/01**

(73) Titulaire: **Orange**
**75015 Paris (FR)**

(72) Inventeur: **Guerin, Alexandre**
**35000 RENNES (FR)**

(74) Mandataire: **Cabinet Plasseraud**
**66, rue de la Chaussée d'Antin**
**75440 Paris Cedex 09 (FR)**

(56) Documents cités:
**US-B2- 8 144 862**

• **JUN H CHO ET AL: "An Objective Technique for
Evaluating Doubletalk Detectors in Acoustic
Echo Cancelers", IEEE TRANSACTIONS ON
SPEECH AND AUDIO PROCESSING, IEEE
SERVICE CENTER, NEW YORK, NY, US, vol. 7,
no. 6, 1 novembre 1999 (1999-11-01),
XP011054403, ISSN: 1063-6676**

## Description

La présente invention concerne l'estimation de couplage énergétique entre deux signaux, et plus particulièrement entre des signaux vocaux.

Elle trouve des applications dans le domaine des télécommunications, et plus particulièrement dans celui de la téléphonie.

L'estimation du couplage énergétique qui est à l'origine d'écho dans un système de télécommunication peut être utilisée par un annuleur d'écho. Un tel couplage énergétique peut être linéaire (couplage acoustique) ou non-linéaire (couplage solidien, signaux saturés par une chaîne d'amplification).

Les techniques actuelles d'estimation de couplage énergétique définissent le couplage énergétique comme le rapport entre une énergie d'un signal d'écho y et une énergie d'un signal de référence x.

On appelle signal de référence tout signal destiné à être rendu, après traitement ou non, par un haut-parleur, tel qu'un haut parleur de téléphone mobile par exemple. Le signal de référence peut être noté $x(t)$.

On appelle signal d'écho tout signal acquis par un microphone, tel que le microphone d'un téléphone mobile par exemple. Le signal d'écho peut être noté $y(t)$.

On obtient alors la formule suivante pour la valeur de couplage énergétique entre les signaux de référence et d'écho :

$$C = \frac{E\{y^2(t)\}}{E\{x^2(t)\}} \qquad (1)$$

où C représente le couplage énergétique, $E\langle y^2(t)\rangle$ représente l'espérance de l'énergie du signal d'écho sur une période donnée et $E\langle x^2(t)\rangle$ représente l'espérance de l'énergie du signal de référence sur une période donnée.

En théorie, le couplage énergétique peut être estimé par l'équation (1), le calcul des espérances étant généralement obtenu par fenêtre glissante ou par lissage autorégressif.

Cependant, en pratique, la présence de perturbations rend le précédent calcul peu robuste, notamment en raison de :

- bruit sur le microphone tel qu'un bruit de fond ou une parole locale. Le bruit modifie l'énergie sur le microphone et donc l'énergie du signal d'écho y, ce qui a pour effet de perturber l'estimation du couplage énergétique, principalement lorsque le bruit a une énergie supérieure ou égale à l'énergie du signal d'écho y ;
- délai entre le microphone et le haut-parleur. Les signaux à l'origine de l'écho et présents sur le signal de référence sont des signaux de parole qui sont peu stationnaires. Ainsi, afin d'estimer le couplage en continu avec une latence réduite, il convient d'utiliser une fenêtre glissante relativement courte afin de suivre les variations du signal. Les signaux d'écho et de référence doivent alors préalablement être synchronisés afin d'éviter de mesurer un couplage énergétique entre des portions de signal qui ne se correspondent pas, et donc de provoquer un biais à l'estimation.

Pour améliorer la robustesse au bruit, des détecteurs de double parole DTD (pour « Double Talk Detector » en anglais) peuvent être prévus. Un DTD est basé sur la fonction d'inter corrélation $\gamma_{x,y}(i,j) = E\{y(t-i)x(t-j)\}$ entre le signal de référence et le signal d'écho. En pratique, dans un système causal, il suffit de calculer la fonction d'inter corrélation pour j=0, ce qui revient à calculer $\gamma_{x,y}(i) = E\{y(t-i)x(t)\}$. L'indice i désigne alors la composante $\gamma_{x,y}(i)$ du vecteur $\gamma_{x,y}$. En considérant une norme quelconque ($\| \; \|_{1,2...\infty}$) du vecteur $\gamma_{x,y}$ en tant qu'indicateur, il est constaté, qu'en raison de l'indépendance des signaux de bruit et des signaux d'écho et dans le cas où le couplage à l'origine de l'écho est majoritairement linéaire, $\|\gamma_{x,y}\|$ prend des valeurs élevées lorsque le rapport écho à bruit est élevé et des valeurs faibles lorsque le rapport écho à bruit est faible.

Cependant, la fonction d'inter corrélation n'est pas normalisée ce qui est problématique pour prendre une décision quant à la valeur du couplage énergétique.

Le document « A New Class of Doubletalk Detectors Based on Cross-Correlation », de Benesty, Jacob, Morgan, Dennis R. et Cho, Jun H, IEEE TRANSACTIONS ON SPEECH AND AUDIO PROCESSING, Vol. 8, propose une version normalisée de la fonction d'inter corrélation dans le domaine temporel.

Le document « A Double-Talk Detector Based on Coherence » de Gänsler, Thomas et Al, IEEE TRANSACTIONS ON COMMUNICATIONS, 1996, Vol. 44, propose une version normalisée de la fonction d'inter corrélation dans le domaine fréquentiel. Dans ce cas, la fonction d'inter corrélation est appelée cohérence spectrale.

Dans la plupart des cas, le calcul de la fonction d'inter corrélation nécessaire au détecteur double parole DTD permet de déduire directement la fonction de couplage énergétique, sous la forme d'une réponse impulsionnelle ou fonction de transfert selon que l'on travaille dans le domaine temporel ou fréquentiel, tel que décrit par exemple dans le document « Adaptive Filter Theory » de Haykin, Prentice Hall-Englewood, 1986.

Le couplage énergétique peut alors être obtenu en déterminant la norme 2 de la fonction de couplage, que ce soit dans le domaine temporel ou fréquentiel.

Dans le domaine temporel, l'estimation de la réponse impulsionnelle est coûteuse en ressource en ce qu'elle nécessite une inversion de matrice. A cet effet, le document précité « A New Class of Doubletalk Detectors Based on Cross-Correlation » propose d'utiliser un filtre adaptatif.

En outre, dans le cas où le couplage n'est pas linéaire, une solution plus robuste consiste à utiliser la fonction d'inter corrélation entre les enveloppes des signaux d'écho et de référence, plutôt qu'entre les signaux d'écho et de référence eux-mêmes :

$$\tilde{\gamma}_{x,y}^{'}(i) = E\left\{\left|y(t-i)\right|\left|x(t)\right|\right\}$$

Un tel indicateur peut également être normalisé de la manière précédemment décrite pour son utilisation dans un détecteur de double parole DTD.

Quant aux problèmes de synchronisation dus au délai entre le microphone et le haut-parleur, ils peuvent être résolus par la méthode de l'inter corrélation, en s'assurant que $\tilde{\gamma}_{x,y}(i)$ soit calculé pour des valeurs de i supérieures au retard entre le microphone et la référence (à échantillonnage donné, i étant un nombre d'échantillons pouvant être considéré comme équivalent à une durée).

Toutefois, les méthodes précédemment décrites sont complexes, ce qui les rend difficilement exploitables sur des terminaux à puissance de calcul limitée. Elles nécessitent en effet un détecteur de double parole DTD généralement basé sur le calcul de la fonction d'inter corrélation entre les signaux de référence et d'écho, ce qui est très complexe :

- Dans le domaine temporel, le détecteur de double parole DTD nécessite le calcul et l'inversion d'une matrice de taille N*N, où N est un entier proportionnel à la taille de la réponse impulsionnelle du couplage entre la référence et le microphone.
- Dans le domaine fréquentiel, le calcul de la cohérence spectrale nécessite au préalable de calculer une transformée de Fourier de taille proche de N, transformée dont la complexité est en $O(N.\log(N))$ .

Ainsi, de telles méthodes ne peuvent être utilisées dans des terminaux possédant des ressources limitées.

La présente invention vient améliorer la situation.

Elle propose à cet effet un procédé d'estimation d'un couplage énergétique entre un signal de référence échantillonné et un signal d'écho échantillonné, le procédé comprenant:

- détermination d'un signal d'énergie en fonction du signal de référence sur un ensemble d'instants prédéterminés et d'un signal d'énergie du signal d'écho aux instants prédéterminés;
- décomposition des signaux respectifs en trames d'indice I, de L échantillons ;
- détermination, pour les trames respectives d'indice I, d'une énergie de trame en fonction des L échantillons de la trame ;
- pour chaque paire de trames d'indice I, détermination d'une valeur de couplage énergétique en fonction des énergies de trames d'indice I;
- vérification que, pour au moins M paires de trames consécutives, au moins un critère de stabilité de l'estimation du couplage est satisfait;
- en fonction du résultat de la vérification, estimation du couplage énergétique entre le signal de référence et le signal d'écho, l'estimation de couplage énergétique étant fonction des M valeurs de couplage énergétique des M paires de trames.

Ainsi, la présente invention permet de déterminer une valeur de couplage énergétique pour chaque paire de trames. L'estimation est alors obtenue sur la base de M valeurs de couplage énergétique. Une telle estimation est uniquement déterminée si un critère de stabilité de l'estimation du couplage est satisfait. On entend par critère de stabilité de l'estimation du couplage, tout critère permettant de discriminer une situation dans laquelle le signal d'écho comprend uniquement de l'écho d'une situation dans laquelle le signal d'écho comprend en outre du bruit. Ce critère de stabilité joue le rôle ici de détecteur de double-parole dans les méthodes de l'état de l'art. Comme détaillé dans ce qui suit, un tel critère peut prendre en compte une latence entre deux échantillons caractérisant un signal de parole ou peut prendre en compte une disparité entre les valeurs de couplage énergétique des M trames. L'invention ne se restreint pas à ces modes de réalisation et comprend également la prise en compte de tout autre critère permettant la discrimination précitée.

La prise en compte d'un tel critère permet d'améliorer la fiabilité de l'estimation du couplage énergétique en ce qu'elle est déterminée uniquement dans des situations dans lesquelles le signal d'écho comprend uniquement de l'écho. La complexité d'une telle méthode est moindre comparée à l'utilisation d'un détecteur de double parole classique. En effet, la simple détermination d'un critère discriminant suffit à obtenir une fiabilité satisfaisante de l'estimation du couplage énergétique.

Selon un mode de réalisation de l'invention, les instants d'échantillonnage des signaux d'énergie sont obtenus par décimation des instants d'échantillonnage des signaux de référence et d'écho par un facteur de décimation d.

Ainsi, la complexité de la méthode revendiquée est réduite en ce qu'on ne calcule avantageusement les énergies que pour un sous ensemble d'échantillons comparativement à l'ensemble des échantillons des signaux due référence et d'écho. De manière alternative, dans le cas où la fonction de transfert du couplage énergétique est concentrée dans les basses fréquences, l'invention peut prévoir un sous-échantillonnage des signaux d'écho et de référence, ce qui limite le nombre d'opérations nécessaires au calcul des énergies des échantillons.

Les instants de calcul des énergies peuvent être également issus d'un sous-échantillonnage non régulier. En effet, dans le cas où le signal de référence est intermittent comme la parole, il peut s'avérer avantageux de ne conserver que les phases d'activité de ce signal, et de ne choisir des instants que durant ces phases d'activités. En pratique, on peut utiliser une détection d'activité vocale appliquée au signal de référence pour ne sélectionner que les phases actives, détection qui peut être basée sur un simple seuil absolu, un seuil relatif, ou mettre en oeuvre des techniques plus élaborées adaptées aux signaux de parole.

L'invention peut en outre prévoir que les signaux d'énergie respectifs à un instant t sont déterminés par fenêtre glissante en fonction des T échantillons du signal de référence, respectivement d'écho, précédant temporellement l'instant t, T étant une taille prédéterminée de fenêtre glissante.

Déterminer l'énergie d'un échantillon par fenêtre glissante permet d'améliorer la fiabilité du calcul de la valeur d'énergie. La taille T peut être fixée en fonction de la stationnarité des signaux d'écho et de référence. Par exemple, dans le cas de signaux de parole, la stationnarité ne dépasse pas 30 millisecondes (ms) et ainsi, une taille de fenêtre glissante de 50 à 100 ms est satisfaisante (soit 400 à 800 échantillons précédents dans le cas d'un échantillonnage à 8 kHz).

Selon un mode de réalisation de l'invention, la vérification qu'au moins un critère de stabilité de l'estimation du couplage est satisfait comprend les étapes-suivantes :

- détermination de la valeur maximale parmi les M valeurs de couplage énergétique des M paires de trames,
- détermination de la valeur minimale parmi les M valeurs de couplage énergétique desdites M paires de trames,
- comparaison du rapport de la valeur maximale sur la valeur minimale avec un seuil prédéterminé.

Si le rapport est inférieur au seuil prédéterminé, un critère de stabilité énergétique de l'estimation du couplage est satisfait et l'estimation du couplage énergétique est déterminée en fonction des M valeurs de couplage énergétique.

Ainsi, l'estimation du couplage énergétique est effectuée uniquement dans des cas où le signal d'écho comprend seulement de l'écho (peu de bruit). En effet, en situation d'écho, les valeurs de couplage énergétique des M trames successives sont relativement stables, tandis qu'en présence de perturbations, les valeurs de couplage énergétique déterminées sont fortement perturbées.

L'invention peut prévoir que, pour chaque trame d'indice I du signal de référence, l'énergie de trame est égale à l'énergie maximale de la trame d'indice I du signal de référence, correspondant à un instant $k_{max1}$.

En complément, l'énergie de trame de la trame d'indice I du signal d'écho est égale à l'énergie du signal d'écho à l'instant $k_{max1}$.

Ainsi, en déterminant l'instant $k_{max1}$ pour lequel l'énergie est maximale dans la trame I du signal de référence, il est probable que ce même instant corresponde à l'énergie maximale pour la trame I du signal d'écho. Ainsi, le rapport écho sur bruit est maximisé. Une telle réalisation est préférentielle dans le cas où le retard du signal d'écho par rapport au signal de référence est relativement faible (en pratique, lorsqu'il est inférieur à la taille T de la fenêtre utilisée pour le calcul des valeurs d'énergie).

Alternativement, la détermination de l'énergie de trame de la trame d'indice I du signal d'écho est égale à l'énergie maximale de la trame d'indice I du signal d'écho, correspond à un instant $k_{max2}$.

Cette alternative permet de fiabiliser le calcul de la valeur de couplage énergétique lorsque la latence entre le signal de référence et le signal d'écho est importante en regard de la taille d'une trame. En effet, si par exemple la latence entre les signaux est supérieure à la moitié de la taille de la trame, les signaux de référence et d'écho ne sont plus synchronisés. A cet effet, cette alternative propose de déterminer en outre l'instant $k_{max2}$ auquel l'énergie du signal d'écho est maximale ce qui permet de synchroniser les signaux d'écho et de référence (et par conséquent les signaux d'énergie) et d'ainsi rendre la valeur de couplage énergétique proche de la valeur réelle.

De manière complémentaire, il peut être avantageux de prévoir la recherche de l'instant $k_{max2}$ non seulement parmi les L énergies de la trame d'indice I du signal d'écho, mais également parmi au moins certaines des premières énergies de la trame d'indice I+1 du signal d'écho, ce qui permet de fiabiliser la mesure de la valeur de couplage énergétique pour la paire de trames d'indice I.

En complément, l'instant $k_{max2}$ est obtenu par recherche de l'énergie maximale parmi les énergies aux instants postérieurs à l'instant $k_{max1}$. En effet, les systèmes à l'origine de l'écho sont généralement causaux, c'est-à-dire que le signal d'écho est en retard par rapport au signal de référence. Dans ce cas, il est avantageux de ne rechercher l'indice $k_{max2}$ que dans les instants suivants $k_{max1}$, ce qui en pratique augmente la fiabilité de la méthode et réduit en moyenne la complexité de la recherche.

Selon un mode de réalisation, la vérification qu'au moins un critère de l'estimation du couplage est satisfait comprend :

- pour chaque paire de trames parmi les M paires de trames, déterminer une latence correspondant à la différence entre un instant $k_{max1}$ d'énergie maximale de la trame du signal de référence et un instant $k_{max2}$ d'énergie maximale de la trame du signal d'écho,
- détermination de la valeur maximale parmi les M latences des M paires de trames,
- détermination de la valeur minimale parmi les M latence desdites M paires de trames,
- comparaison de la différence entre la valeur maximale et la valeur minimale avec un seuil prédéterminé.

Si la différence est inférieure au seuil prédéterminé, un critère de stabilité temporelle de l'estimation du couplage est satisfait et l'estimation du couplage énergétique est déterminée en fonction des M valeurs de couplage énergétique.

Ainsi, ce mode de réalisation permet de renforcer la décision de prendre en compte ou non l'estimation du couplage entre le signal d'écho et le signal de, référence en ce qu'il introduit un critère de stabilité temporelle, particulièrement utile lorsque les fonctions de transfert ont une réponse en fréquence présentant de fortes atténuations dans les bandes où le signal de référence est très énergétique.

En complément, les critères de stabilité temporelle et énergétique sont tous deux pris en compte au moyen d'un classificateur Bayésien ou d'une Chaîne de Markov Cachée à plusieurs observations, afin de déterminer la validité de l'estimation du couplage énergétique entre le signal de référence et le signal d'écho.

Ainsi, en combinant plusieurs critères discriminants, la fiabilité du procédé est renforcée.

L'invention peut prévoir que l'estimation du couplage énergétique entre le signal de référence et le signal d'écho est déterminée à partir de l'une des fonctions suivantes :

- la moyenne des M valeurs de couplage énergétique des M paires de trames ;
- la moyenne logarithmique des M valeurs de couplage énergétique dés M paires de trames ;
- la moyenne de la norme 2 des M valeurs de couplage énergétique des M paires de trames ; ou
- la médiane des M valeurs de couplage énergétique des M paires de trames.

Un deuxième aspect de l'invention concerne un produit programme d'ordinateur comprenant des instructions de code de programme enregistrées sur un support lisible par un ordinateur, pour l'exécution par un processeur des étapes du procédé selon le premier aspect de l'invention.

Un troisième aspect de l'invention concerne un dispositif d'estimation d'un couplage énergétique entre un signal de référence échantillonné et un signal d'écho échantillonné, le dispositif comprenant:

- une première unité de détermination d'un signal d'énergie du signal de référence sur un ensemble d'instants prédéterminés en fonction du signal de référence et d'un signal d'énergie du signal d'écho aux instants prédéterminés;
- une unité de décomposition des signaux d'énergie respectifs en trames d'indice I, de L échantillons ;
- une seconde unité de détermination, pour les trames respectives d'indice I, d'une énergie de trame en fonction des L échantillons de la trame ;
- une troisième unité de détermination, pour chaque paire de trames d'indice I, d'une valeur de couplage énergétique en fonction des énergies de trames d'indice I ;
- une unité de vérification que, pour au moins M paires de trames consécutives, au moins un critère de stabilité de l'estimation du couplage est satisfait;
- une quatrième unité de détermination, en fonction du résultat de la vérification, de l'estimation du couplage énergétique entre le signal de référence et le signal d'écho, l'estimation de couplage énergétique étant fonction des M valeurs de couplage énergétique des M paires de trames.

Un quatrième aspect de l'invention concerne un terminal mobile de télécommunications comprenant un dispositif d'estimation d'un couplage énergétique entre un signal de référence échantillonné et un signal d'écho échantillonné selon le troisième aspect de l'invention.

D'autres caractéristiques et avantages de l'invention apparaîtront à l'examen de la description détaillée ci-après, et des dessins annexés sur lesquels:

- la figure 1 illustre un terminal de communication selon un mode de réalisation de l'invention ;
- la figure 2 présente un dispositif d'estimation de couplage énergétique entre un signal de référence et un signal d'écho, selon un mode de réalisation de l'invention ;
- la figure 3 présente des résultats obtenus par mise en oeuvre du dispositif représenté sur la figure 2, selon un mode de réalisation ;
- la figure 4 présente des résultats obtenus par mise en oeuvre du dispositif représenté sur la figure 2, selon un autre mode de réalisation ;
- la figure 5 est un diagramme illustrant les étapes d'un procédé selon certains modes de réalisation de l'invention.

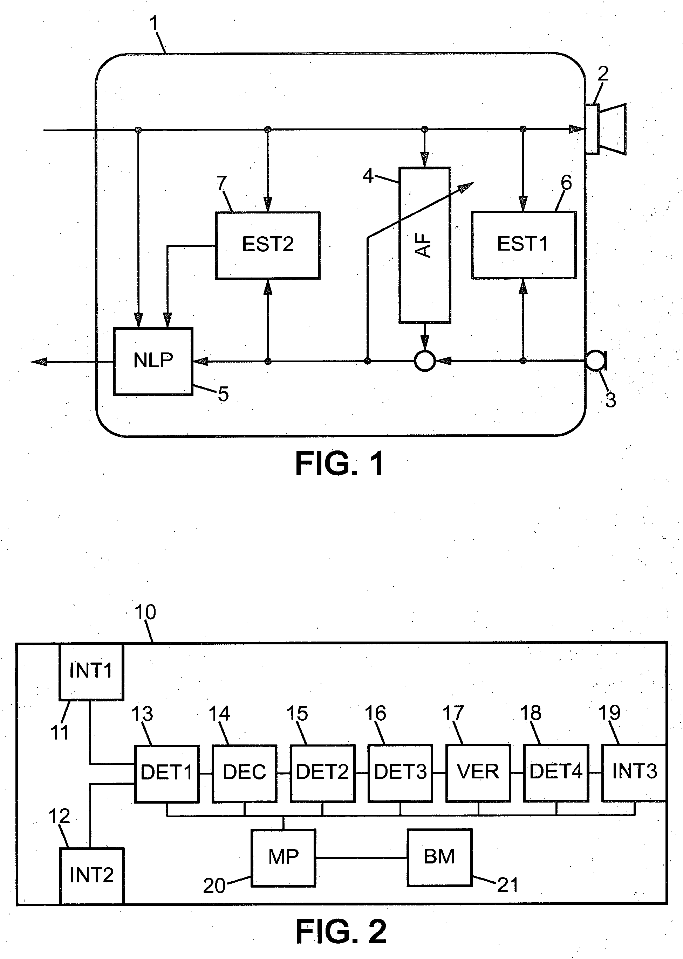

La figure 1 illustre un terminal de communication selon un mode de réalisation de l'invention.

Le terminal 1 comprend un haut-parleur 2 apte à restituer un signal de référence reçu par le terminal 1, ainsi qu'un microphone 3 apte à acquérir un signal d'écho. Le terminal 1 comprend en outre un filtre adaptatif 4 apte à réduire l'écho dans le signal d'écho reçu du microphone 3, sur la base d'une estimation du couplage énergétique entre le signal de référence et le signal d'écho. L'estimation du couplage énergétique est déterminée par un premier dispositif d'estimation de couplage énergétique 6 apte à recevoir le signal de référence et le signal d'écho.

Le terminal 1 comprend un processeur non-linéaire pour la compensation d'écho du signal d'écho, et apte à recevoir une estimation d'écho depuis un second dispositif d'estimation de couplage énergétique 7.

La figure 2 illustre un dispositif 10 d'estimation du couplage énergétique entre un signal d'écho et un signal de référence.

Le dispositif 10 peut être utilisé en tant que premier dispositif 6 et/ou second dispositif 7 dans le terminal de télécommunication illustré à la figure 1.

Le dispositif 10 comprend une première interface 11 pour la réception du signal de référence échantillonné et une deuxième interface 12 pour la réception du signal d'écho échantillonné.

Les signaux de référence et d'écho peuvent être échantillonnés en N échantillons sur une période donnée. On considère que les signaux de référence et d'écho ont une base temporelle commune. Ainsi, on appelle échantillons correspondants, un échantillon du signal de référence correspondant au même instant qu'un échantillon du signal d'écho.

Les signaux d'écho et de référence sont transmis à une première unité de détermination 13 apte à déterminer un signal d'énergie du signal de référence sur un ensemble d'instants prédéterminés et un signal d'énergie du signal d'écho aux instants prédéterminés. Chaque signal d'énergie comprend alors un échantillon d'énergie à chaque instant prédéterminé, le nombre d'échantillons d'énergie pouvant correspondre au nombre total d'échantillons présents dans le signal de référence ou d'écho. Toutefois, l'invention peut prévoir que les instants prédéterminés soient espacés de d échantillons du signal de référence ou d'écho, d étant un facteur de décimation.

Les instants prédéterminés peuvent ne pas être régulièrement espacés Afin de fiabiliser la mesure et de limiter les calculs, il est parfois préférable, notamment sur les signaux intermittents comme la parole, de ne conserver que les phases où le signal est effectivement actif. En pratique, on pourra utiliser une détection d'activité vocale appliquée sur le signal de référence, et ne choisir les instants d'échantillonnage des signaux d'énergie que sur ces phases d'activité.

En outre, il est possible de sous échantillonner les signaux de référence et d'écho (entre les interfaces 11 et 12 et la première unité de détermination 13) afin de limiter les calculs des valeurs d'énergie, notamment lorsque la fonction de transfert du couplage énergétique est concentrée dans les basses fréquences.

L'énergie du signal de référence à chaque instant prédéterminé peut être déterminée par fenêtre glissante en fonction de T échantillons du signal de référence précédant temporellement l'instant prédéterminé, en considérant une taille de fenêtre étant égale à T, T étant exprimé en nombre d'échantillons. De même, l'énergie du signal d'écho à chaque instant prédéterminé peut être déterminée par fenêtre glissante en fonction de T échantillons du signal d'écho précédant temporellement l'instant prédéterminé.

Dans la suite, on note $R_x$ le signal de référence et $T_x$ le signal d'écho. Les énergies aux instant *i*, notées $E_{Rx}(i)$ et $E_{Tx}(i)$ peuvent être calculées de la façon suivante :

$$E_{Rx}(i) = \sum_{t=0}^{T-1} R_x^2(i-t)$$

$$E_{Tx}(i) = \sum_{t=0}^{T-1} T_x^{\ 2}(i-t)$$

Selon une variante, on peut prévoir une fenêtre centrée sur l'instant prédéterminé auquel on détermine l'énergie.

La valeur de T peut être choisie en fonction de la stationnarité des signaux d'écho et de référence. Dans le cas de signaux de parole, la stationnarité ne dépasse pas 30ms, et ainsi, une taille de fenêtre glissante de 50 à 100ms est satisfaisante (soir 400 à 800 échantillons dans le cas d'un échantillonnage à 8kHz). En deçà de cette valeur, la variance du couplage énergétique est très importante ce qui peut fortement affecter la fiabilité du calcul de l'estimation. Au-delà de cette valeur, la robustesse du calcul du couplage énergétique peut être affectée car la distinction entre les situations d'écho seul et les situations de bruit sur le signal d'écho ne sont plus distinguables.

D'autres méthodes peuvent également être utilisées pour le calcul des énergies, comme le lissage autorégressif d'ordre 1 par exemple.

A la sortie de la première unité de détermination 13, le dispositif 10 comprend une unité de décomposition 14 des signaux d'énergie respectifs en trames d'indice I de L échantillons.

En variante, il peut être prévu de décomposer les signaux de manière à ce que chaque trame comprenne un échantillon correspondant à un signal de parole.

Des paires de trames sont ainsi formées, chaque paire comprenant la trame d'indice I du signal d'énergie du signal de référence et la trame d'indice I du signal d'énergie du signal d'écho. Chaque paire de trames peut ainsi être indexée par l'indice I.

Chaque paire de trame d'indice I comprend donc L échantillons d'énergie.

La taille L des trames peut être choisie de manière à avoir, pour chaque trame, un échantillon du signal de référence suffisamment énergétique pour générer de l'écho au niveau du signal d'écho. En contrepartie, la taille L ne doit pas être trop importante afin d'éviter d'avoir plusieurs segments de parole énergétiques, ce qui peut dégrader la robustesse associée à la détermination de l'estimation du couplage énergétique. En pratique, on peut fixer L entre 100 et 400ms (la taille L est dans ce cas exprimée en secondes, le nombre d'échantillons correspondants dépendant de l'échantillonnage des signaux et du facteur de décimation d). A noter qu'il peut être prévu des tailles variables de trames. Dans ce qui suit, nous considérons une longueur fixe de trame, chaque trame comportant L échantillons.

A la sortie de l'unité de décomposition 14, le dispositif 10 comprend une deuxième unité de détermination 15 apte à déterminer, pour les trames respectives d'indice I, une énergie de trame $\tilde{E}_{Rx}^{I}$ respectivement $\tilde{E}_{Tx}^{I}$ en fonction des L échantillons de la trame.

Pour la suite des calculs, on note $E_{Rx}^{I}(k)$ l'énergie de l'échantillon à l'instant k de la trame d'indice I du signal d'énergie du signal de référence et on note $E_{Tx}^{I}(k)$ l'énergie de l'échantillon à l'instant k de la trame d'indice I du signal d'énergie du signal d'écho.

Selon une première approche, la détermination des énergies des trames d'indice I comprend la détermination de l'instant $k_{max1}$ pour lequel l'énergie du signal de référence est maximale dans la trame d'indice I. L'énergie de trame d'indice I, notée $\tilde{E}_{Rx}^{I}$, du signal de référence est alors égale à l'énergie du signal de référence à l'instant $k_{max1}$ (choisi parmi les instants prédéterminés), et dans une première approche, l'énergie de trame d'indice I, notée $\tilde{E}_{Tx}^{I}$, du signal d'écho est égale à l'énergie du signal d'écho à l'instant $k_{max1}$.

Soit *arg* la fonction 'argument' n a ainsi les relations suivantes :

$$k_{max1}(l) = \arg\left(\max_{k}\left(E_{Rx}^{\ l}(k)\right)\right)$$

pour k variant parmi les instants prédéterminés de la trame I ;

$$\tilde{E}_{Rx}^{l} = E_{Rx}^{l}(k_{max1}(l)) \ ;$$

$$\tilde{E}_{Tx}^{l} = E_{Tx}^{l}(k_{\max 1}(l)) \; ;$$

Le dispositif 1 comprend en outre une troisième unité de détermination 16 de la valeur de couplage énergétique de chaque paire de trames d'indice I, en fonction des énergies de trames d'indice I. Le calcul suivant peut être effectué :

$$Cpl(I) = \frac{\tilde{E}_{Rx}^{I}}{\tilde{E}_{Tx}^{I}}$$

où Cpl(I) représente la valeur de couplage énergétique de la paire de trames d'indice I.

A l'instant $k_{\max}(I)$, la probabilité que $k_{\max 1}(I)$ soit également l'instant auquel le signal d'écho a une énergie maximale dans la trame d'indice I, est forte. Ainsi, le rapport écho sur bruit est maximisé, et l'estimation de Cpl(I) n'est pas ou peu biaisée. Le fait de sélectionner le même instant $k_{\max 1}(l)$ permet de synchroniser les signaux d'énergie. La première approche est particulièrement adaptée lorsque le retard du signal d'écho sur le signal de référence est relativement faible (en pratique inférieur à la taille T utilisée pour déterminer les signaux d'énergie).

Selon une seconde approche, la détermination des énergies des trames d'indice I comprend la détermination de l'instant $k_{\max 1}$ (parmi les instants prédéterminés) pour lequel l'énergie du signal de référence est maximale, et de l'indice $k_{\max 2}$ (parmi les instants prédéterminés) pour lequel l'énergie du signal d'écho est maximale. L'énergie de trame d'indice I, notée $\tilde{E}_{Rx}^{I}$, du signal de référence est alors égale à l'énergie du signal de référence à l'instant $k_{\max 1}$ dans la trame d'indice I, et l'énergie de trame d'indice I, notée $\tilde{E}_{Tx}^{I}$, du signal d'écho est égale à l'énergie du signal d'écho à l'instant $k_{\max 2}$ dans la trame d'indice I.

On obtient ainsi les relations suivantes :

$$k_{\max 1}(l) = \arg\left(\max_{k}\left(E_{Rx}^{l}(k)\right)\right) \; , \text{ pour k variant parmi les instants prédéterminés ;}$$

$$k_{\max 2}(l) = \arg\left(\max_{k}\left(E_{Tx}^{l}(k)\right)\right), \text{ pour k variant parmi les instants prédéterminés;}$$

$$\tilde{E}_{Rx}^{I} = E_{Rx}^{I}(k_{\max 1}(I)) \; ;$$

$$\tilde{E}_{Tx}^{I} = E_{Tx}^{I}(k_{\max 2}(I)) \; ;$$

$$Cpl(I) = \frac{\tilde{E}_{Rx}^{I}}{\tilde{E}_{Tx}^{I}}$$

où Cpl(I) représente la valeur de couplage énergétique de la paire de trames d'index I.

La seconde approche permet de fiabiliser le calcul des valeurs de couplage énergétique lorsque les latences sont importantes entre le signal d'écho et le signal de référence, par rapport à la taille L de trame. En effet, si la latence est plus grande que la moitié de la taille L de trame, les signaux de référence et d'écho, et par conséquent les signaux d'énergie respectifs, ne sont plus synchronisés. Ainsi, déterminer les deux instants auxquels les signaux d'énergie sont respectivement au maximum permet de synchroniser les signaux d'énergie et d'ainsi rendre la variable Cpl(I) proche de la valeur de couplage énergétique réelle.

En complément de cette seconde approche, il peut convenir, afin d'assurer la synchronisation des signaux d'énergie, de prendre en compte l'énergie du signal d'écho au début de la trame l+1, afin de déterminer $k_{max2}$, le nombre d'échantillons supplémentaires du signal d'énergie à considérer dans la trame l+1 dépendant du retard maximal du signal d'écho par rapport au signal de référence. Une alternative à cette méthode, serait de ne pas prendre en compte les derniers échantillons de la trame l du signal d'énergie du signal de référence, afin de déterminer $k_{max1}$, le nombre de derniers échantillons à ne pas considérer dans la fin de la trame l dépendant du retard maximal du signal d'écho par rapport au signal de référence. Le calcul de la valeur de couplage Cpl(l) est ainsi fiabilisée.

Toujours en complément à la seconde approche, dans le cas où le système est causal (le signal d'écho est en retard par rapport au signal de référence, ce qui est vérifié en pratique), la détermination de l'instant $k_{max2}$ peut être effectuée dans la zone postérieure à l'instant $k_{max1}$.

On a alors la relation suivante pour $k_{max2}$ :

$$k_{\max 2}(l) = \arg\left(\max_{k \geq k_{\max 1}}\left(E_{Tx}^{l}(k)\right)\right),$$ pour k variant parmi les instants prédéterminés entre les instants $k_{max1}$ et

l'instant du dernier échantillon de la trame l.

A la sortie de la troisième unité de détermination 16, le dispositif 10 comprend une unité de vérification 17 adaptée pour vérifier que, pour au moins M paires de trames consécutives, au moins un critère de stabilité de l'estimation du couplage est satisfait.

On appelle critère de stabilité de l'estimation de couplage tout critère permettant de discriminer une situation durant laquelle le signal d'écho correspond uniquement à de l'écho et une situation dans laquelle le signal d'écho est très bruité.

Or, les valeurs de Cpl(l) ont deux comportements distincts selon que l'on soit en situation d'écho seul ou en situation fortement bruitée.

En situation d'écho seul, les valeurs de Cpl(l) doivent en théorie être constantes, tandis qu'en présence de perturbations (cas de rapport écho à bruit faible), les valeurs Cpl(l) sont fortement perturbées et sont très éloignées des valeurs réelles de couplage énergétique.

En pratique cependant, les valeurs Cpl(l) sont bruitées du fait :

- de la nature non stationnaire des signaux réels. Dans ce cas, si les signaux d'énergie ne sont pas correctement synchronisées, les valeurs Cpl(l) sont éloignées des valeurs réelles de couplage énergétique du fait de la variation d'énergie du signal d'excitation (signal de parole dans le cas présent) ;
- de la fonction de transfert générant l'écho. La fonction de transfert agit comme un filtre qui vient modifier le spectre des signaux : comme le spectre du signal d'excitation varie en fonction du temps, le couplage observé varie également avec le signal.

Afin d'estimer de manière fiable le couplage énergétique entre le signal de référence et le signal d'écho, la suite de valeurs Cpl(l) peut être considérée comme une variable aléatoire. En présence d'écho seul, les valeurs de Cpl(l) oscillent autour de la valeur de couplage réelle, alors qu'en présence de perturbations (bruit ou parole sur le microphone 3), la variable Cpl(l) prend des valeurs aléatoires. La présente invention propose d'appliquer un algorithme de décision permettant de discriminer les phases d'écho seul des phases bruitées, afin de choisir les paires de trames dans lesquelles l'écho est prépondérant et pour lesquelles la valeur de couplage énergétique est fiable.

Une approche heuristique consiste à considérer chaque valeur Cpl(l) comme fiable si et seulement si les M dernières valeurs de Cpl(l) sont proches les unes des autres.

La variable ΔCpl(l) peut alors être définie comme une mesure de variabilité des valeurs de Cpl(l). Par exemple, on peut définir :

$$\Delta\mathrm{Cpl(l)} = \frac{\max_{i=0,\ldots,M-1}\{\mathrm{Cpl(l-i)}\}}{\min_{i=0,\ldots,M-1}\{\mathrm{Cpl(l-i)}\}}$$

ΔCpl(l) mesure ainsi la disparité logarithmique de la variable Cpl(l) dans une zone d'observation de M trames consécutives.

Afin de déterminer si un critère de stabilité énergétique est vérifié, ΔCpl(l) peut être comparé à un seuil $\Delta_{Cpl}$. Si ΔCpl(l) est inférieur à $\Delta_{Cpl}$, alors le critère de stabilité énergétique est satisfait et l'estimation du couplage énergétique pour la trame l, noté $\tilde{C}(l)$, est déterminé par une quatrième unité de détermination 18, de la manière suivante :

$$\tilde{C}(I) = g(Cpl(I), Cpl(I-1), \ldots, Cpl(I-M+1))$$

Le seuil $\Delta_{Cpl}$ et le nombre M peuvent être déterminés de manière expérimentale en fonction des caractéristiques des conditions rencontrées. Par exemple, un classificateur Bayésien peut être employé pour déterminer la valeur du seuil $\Delta_{Cpl}$.

Aucune restriction n'est attachée à la fonction g utilisée pour déterminer $\tilde{C}(I)$. Il peut s'agir de la moyenne, la moyenne logarithmique, la moyenne de la norme 2, la médiane, etc.

Une approche différente permettant de discriminer les situations d'écho seul des situations de bruit est de modéliser la série des Cpl(I) par une Chaîne de Markov Cachée.

Dans certaines situations, par exemple lorsque les fonctions de transfert ont une réponse en fréquence présentant de fortes atténuations dans les bandes où le signal de référence est très énergétique, la variance de la variable Cpl(I) en situation d'écho seul est très élevée, dégradant les performances de l'estimation de couplage énergétique $\tilde{C}(I)$. Un autre critère de stabilité de l'estimation de couplage peut alors être considéré pour discriminer les situations d'écho seul des situations bruitées.

Un critère de stabilité temporelle de l'estimation du couplage peut être la latence entre les instants auxquels les énergies de trame $\tilde{E}_{Rx}^{I}$ et $\tilde{E}_{Tx}^{I}$ ont été obtenues.

Par exemple :

$$latence(l) = \arg\left(\max_{k}\left(E_{Tx}^{l}(k)\right)\right) - \arg\left(\max_{k}\left(E_{Rx}^{l}(k)\right)\right)$$

Selon les notations employées dans la seconde approche décrite précédemment, il s'agit donc de la différence entre les instants $k_{max2}$ et $k_{max1}$. On peut également utiliser l'approche causale pour déterminer la valeur de $k_{max2}$.

Le paramètre latence(I) estime la latence en comparant les instants d'énergie maximale pour les signaux d'énergie respectifs. En situation d'écho seul, ces instants correspondent le plus souvent au retard dû à la fonction de transfert à l'origine de l'écho. En présence de perturbations importantes sur le signal d'écho, les instants $k_{max1}$ et $k_{max2}$ sont indépendants, car les signaux de référence et d'écho sont indépendants.

A nouveau, à partir de cette variable, il peut être prévu de comparer la valeur $\Delta Lat(I)$, déterminée selon la formule ci-après :

$$\Delta Lat(I) = \max_{i=0,\ldots,M-1}\{latence(I-i)\} - \min_{i=0,\ldots,M-1}\{latence(I-i)\}$$

avec un seuil prédéterminé. Si $\Delta Lat(I)$ est inférieur au seuil, le critère de stabilité temporelle est satisfait et la détermination de l'estimation du couplage énergétique peut être valablement effectuée.

Il est également prévu de remplacer la variable latence(I) par la variable $\Delta$latence(I) = latence(I) - latence(I-1).

La variable $\Delta$latence(I) présente la propriété d'être centrée en moyenne. En effet, en présence d'écho seul, la fonction de transfert du couplage à l'origine de l'écho ne varie que très peu, et le retard reste globalement constant : la variable $\Delta$latence(I) oscille alors faiblement autour de 0. En présence de perturbations importantes, $\Delta$latence(I) prend des valeurs aléatoires importantes et oscille fortement d'une trame à l'autre.

A noter que le critère de stabilité temporelle et le critère de stabilité énergétique peuvent être utilisés conjointement, dans le cas d'un classificateur Bayésien, ou d'une Chaîne de Markov Cachée à plusieurs observations, ce qui permet de fiabiliser la prise de décision.

Dans le cas où l'un des critères précédemment cités (ou une combinaison de ces critères) est satisfait, la quatrième unité de détermination 18 détermine alors une estimation du couplage énergétique, tel que précédemment expliqué.

Lorsqu'une estimation de couplage énergétique fiable a été obtenue par la quatrième unité de détermination 18, cette estimation est transmise via une troisième interface 19 soit au filtre adaptatif 6 soit au processeur non linéaire 5 du terminal représenté en figure 1.

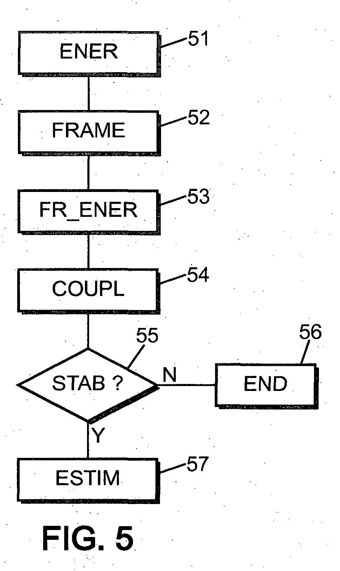

Le dispositif 10 comprend également un microprocesseur 20 apte à contrôler les différentes unités 13 à 19 précédemment décrites et coopérant avec un bloc mémoire 21 incluant une mémoire de stockage et/ou de travail ainsi qu'une mémoire tampon pour mémoriser toutes données nécessaires à la mise en oeuvre du procédé d'estimation tel que décrit ultérieurement en référence à la figure 5.

Le bloc mémoire 21 peut comporter un programme informatique comportant des instructions de code pour la mise en oeuvre des étapes du procédé d'estimation selon l'invention lorsque ces instructions sont exécutées par le processeur du dispositif, notamment les étapes de détermination d'un signal d'énergie du signal de référence sur un ensemble d'instants prédéterminés et d'un signal d'énergie du signal d'écho aux instants prédéterminés, de décomposition des signaux d'énergie respectifs en trames d'indice I de L échantillons, de détermination, pour les trames respectives d'indice I, d'une énergie de trame fonction des L échantillons de la trame, pour chaque paire de trames d'indice I, de détermination d'une valeur de couplage énergétique en fonction des énergies de trames d'indice I, de vérification que, pour au moins M paires de trames consécutives, au moins un critère de stabilité de l'estimation du couplage est satisfait et en fonction du résultat de la vérification, d'estimation du couplage énergétique entre le signal de référence et le signal d'écho, l'estimation de couplage énergétique étant fonction des M valeurs de couplage énergétique des M paires de trames.

Typiquement, la figure 5 illustre l'algorithme d'un tel programme informatique.

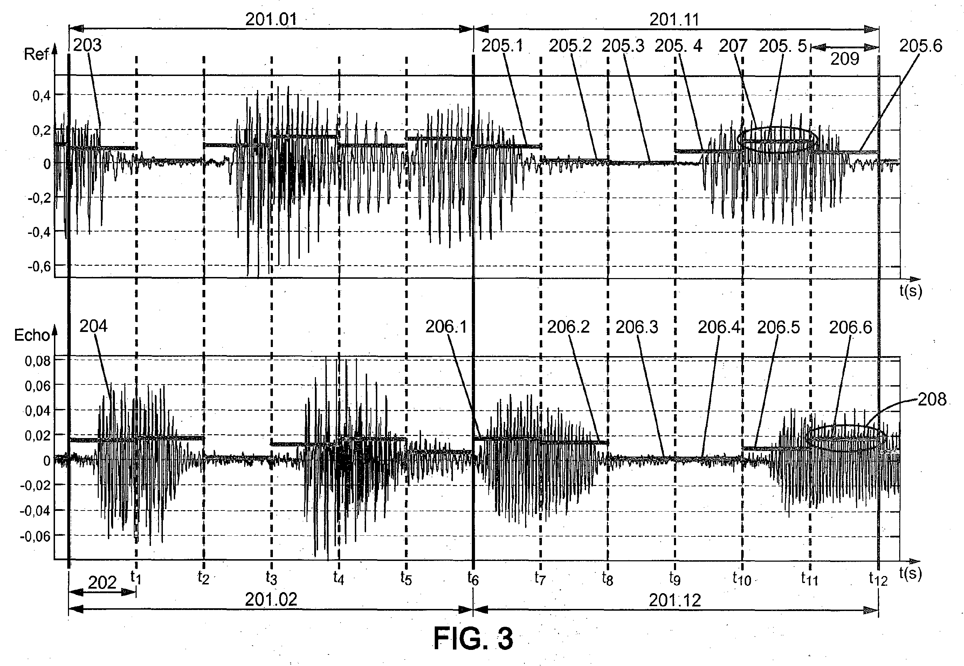

La figure 3 présente des résultats obtenus par mise en oeuvre du dispositif représenté sur la figure 2, selon un mode de réalisation

La figure 3 illustre l'évolution temporelle d'un signal de référence 203 et d'un signal d'écho 204, le signal d'écho étant une version retardée et filtrée passe-haut du signal de référence. Les signaux de référence 203 et d'écho 204 sont échantillonnés. Comme précédemment détaillé, les signaux 203 est 204 peuvent être sous-échantillonnés en fonction d'une période de sous-échantillonnage.

Un signal d'énergie du signal de référence 203 a été déterminé à des instants prédéterminés $t_1$ à $t_{12}$. A chacun de ces instants, une énergie du signal de référence est déterminée par fenêtre glissante. La fenêtre glissante correspond à la durée 202, comprenant T échantillons du signal de référence. Dans l'exemple particulier de la figure 3, la période T correspond également à la période séparant chaque instant prédéterminé, et ce afin de simplifier la présentation de la figure 3. Il est bien sûr prévu que la taille T puisse être différente de la période séparant les instants prédéterminés, obtenue par le facteur de décimation d.

Par des calculs de fenêtre glissante, tel que précédemment détaillé, douze énergies sont obtenues pour les instants prédéterminés $t_1$ à $t_{12}$. En particulier, l'énergie 205.1 à l'instant $t_7$ est obtenue par fenêtre glissante, tel que précédemment détaillé, pour les échantillons du signal de référence compris entre l'instant $t_6$ (exclu) et l'instant $t_7$ (inclus).

En outre, un signal d'énergie du signal d'écho a été déterminé sur les 12 instants prédéterminés $t_1$ à $t_{12}$. A chacun de ces instants, une énergie du signal d'écho est déterminée, par fenêtre glissante. La fenêtre glissante correspond à nouveau à la durée 202, comprenant T échantillons du signal d'écho. En particulier, l'énergie 206.1 à l'instant $t_7$ est obtenue par fenêtre glissante, tel que précédemment détaillé, pour les échantillons du signal d'écho compris entre l'instant $t_6$ (exclu) et l'instant $t_7$ (inclus).

Les signaux d'énergie respectifs sont ensuite décomposés en trames. Dans l'exemple de la figure 3, chaque trame comprend six instants auxquels les énergies respectives des signaux d'écho et de référence ont été respectivement déterminées. On obtient ainsi une trame 201.01 d'indice 1 et une trame 201.11 d'indice 2 pour le signal d'énergie du signal de référence, ainsi qu'une trame 201.02 d'indice 1 et une trame 201.12 d'indice 2 pour le signal d'énergie du signal d'écho.

Dans la suite, on considère uniquement la paire de trames d'indice 2.

Selon les deux approches permettant de déterminer l'énergie de trame de la trame 201.11 d'indice 2, l'énergie de trame de la trame 201.11 d'indice 2 est égale à l'énergie 205.5, entourée par la zone 207 (qui est l'énergie maximale sur la trame 201.11), qui correspond à l'instant $t_{11}$. Dans cet exemple, l'instant $k_{max1}$ est égal à $t_{11}$.

On considère, à titre d'exemple, la deuxième approche pour la détermination de l'énergie de trame de la trame 201.12 d'indice 2. Dès lors, l'énergie de trame de la trame 201.12 d'indice 2 est égale à l'énergie 206.6, entourée par la zone 208 (qui est l'énergie maximale sur la trame 201.12), qui correspond à l'instant $t_{12}$. Dans cet exemple, l'instant $k_{max2}$ est donc égal à $t_{11}$.

La valeur de couplage énergétique de la paire de trames d'indice 2 est alors égale au rapport de l'énergie 206.6 sur l'énergie 205.5.

La latence d'indice 2 est égale à $k_{max2}-k_{max1}=t_{12}-t_{11}$, soit une période 209 correspondant à une fois la période 202 dans cet exemple. En fonction de cette latence, et des latences des paires de trames précédents, on peut décider si le couplage énergétique peut être déterminé ou non.

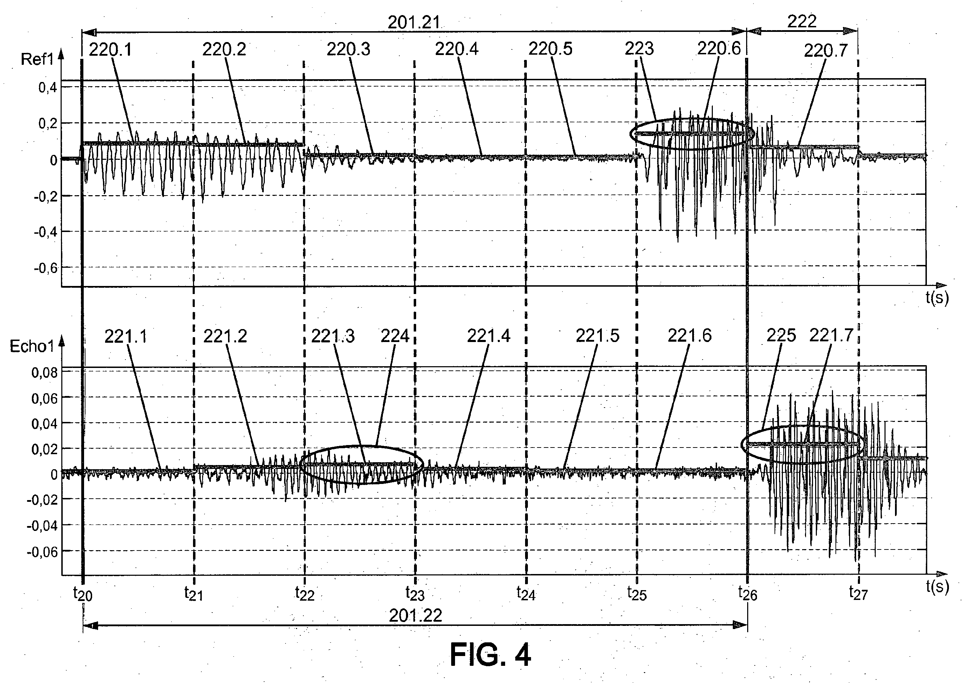

La figure 4 présente des résultats obtenus par mise en oeuvre du procédé décrit ci-après en référence à la figure 5 et du dispositif représenté sur la figure 2, selon un autre mode de réalisation.

A nouveau, la figure 4 présente l'évolution temporelle d'un signal d'écho et d'un signal de référence. Des signaux d'énergie respectifs sont obtenus après sous-échantillonnage aux instants $t_{20}$ à $t_{27}$.

Par des calculs de fenêtre glissante, tel que précédemment détaillé, sept énergies sont obtenues pour le signal de référence aux instants $t_{21}$ à $t_{27}$ et sept énergies sont obtenues pour le signal d'écho aux instants $t_{21}$ à $t_{27}$.

Lors de la décomposition en trames, les énergies du signal de référence comprises entre $t_{21}$ et $t_{26}$ sont regrou-

pées dans une trame 201.21 d'indice I, et l'énergie 220.7 appartient à la trame d'indice I+1. De plus, les énergies du signal d'écho comprises entre $t_{21}$ et $t_{26}$ sont regroupées dans une trame 201.22 d'indice I, et l'énergie 221.7 appartient à la trame d'indice I+1.

Selon les deux approches permettant de déterminer l'énergie de trame 201.21 d'indice I, l'énergie de trame est égale à l'énergie 220.6, entourée par la zone 223 (qui est l'énergie maximale du signal de référence sur la trame 201.21), qui correspond à l'instant $t_{26}$. Dans cet exemple, l'instant $k_{max2}$ est donc égal à $t_{26}$.

On considère, à titre d'exemple, la deuxième approche pour la détermination de l'énergie de trame de la trame 201.22 d'indice I. Dès lors, l'énergie de trame de la trame 201.22 d'indice I est égale à l'énergie 221.3, entourée par la zone 224 (qui est l'énergie maximale du signal d'écho sur la trame 201.22), qui correspond à l'instant $t_{23}$. Dans cet exemple, l'instant $k_{max2}$ est donc égal à $t_{23}$.

Cependant, une valeur de couplage obtenue en calculant le rapport de l'énergie 221.3 sur l'énergie 220.6 serait erronée, en ce que l'énergie 221.3 ne correspond pas à l'énergie de l'écho généré par le signal de référence entre les instants $t_{25}$ et $t_{26}$.

Afin de remédier à ce problème, l'invention prévoit de prendre en compte, dans la détermination de $k_{max2}$, des énergies de la trame d'indice I+1 du signal d'écho compris dans une fenêtre additionnelle 222. Par exemple, l'énergie 221.7 à l'instant $t_{27}$ est prise en compte. Dès lors, l'énergie maximum est l'énergie 221.7 (supérieure à l'énergie 221.3), et par conséquent, l'énergie de trame d'indice I est égale à l'énergie 221.7, ce qui permet de fiabiliser le calcul de la valeur de couplage pour la paire de trames d'indice I. En variante, au lieu de prendre en compte les énergies dans une fenêtre additionnelle 222 dans la trame d'indice I+1 du signal d'écho, il peut être prévu de ne pas prendre en compte certaines dernières énergies de la trame d'indice I du signal de référence lors de la détermination de $k_{max1}$.

La figure 5 est un diagramme illustrant les étapes d'un procédé selon certains modes de réalisation de l'invention.

A une étape 51, un signal d'énergie du signal de référence est déterminé sur un ensemble d'instants prédéterminés et un signal d'énergie du signal d'écho est déterminé aux instants prédéterminés, par la première unité de détermination 13, tel que précédemment expliqué.

A une étape 52, l'unité de décomposition 14 décompose les signaux d'énergie respectifs en trames d'indice I, chaque trame comprenant au moins L échantillons, L étant supérieur ou égal à 1.

A une étape 53, la deuxième unité de détermination 15 détermine; pour les trames respectives d'indice I, une énergie de trame en fonction des L échantillons de la trame.

A une étape 54, la troisième unité de détermination 16 détermine pour chaque paire de trames d'indice I, une valeur de couplage énergétique en fonction des énergies de trames d'indice I.

A une étape 55, l'unité de vérification vérifie que, pour au moins M paires de trames consécutives, au moins un critère de stabilité de l'estimation du couplage est satisfait.

Si aucun critère n'est satisfait, alors le procédé s'achève à l'étape 56.

Si un critère est satisfait, la quatrième unité de détermination, détermine, à une étape 57, une estimation du couplage énergétique entre le signal de référence et le signal d'écho, l'estimation de couplage énergétique étant fonction des M valeurs de couplage énergétique des M paires de trames

Bien entendu, la présente invention ne se limite pas à la forme de réalisation décrite ci-avant à titre d'exemple ; elle s'étend à d'autres variantes.

## Revendications

1. Procédé d'estimation d'un couplage énergétique entre un signal de référence (203) échantillonné et un signal d'écho (204) échantillonné, **caractérisé en ce que** le procécé comprend les étapes suivantes :

   - détermination d'un signal d'énergie du signal de référence sur un ensemble d'instants ($t_1$-$t_{12}$) prédéterminés et d'un signal d'énergie du signal d'écho aux instants prédéterminés ;
   - décomposition des signaux d'énergie respectifs en trames (201.01 ; 201.11 ; 201.02 ;201.12) d'indice I de L échantillons (205.1-205.6 ;206.1-206.6) ;
   - détermination, pour les trames respectives d'indice I, d'une énergie de trame fonction des L échantillons de la trame ;
   - pour chaque paire de trames d'indice I, détermination d'une valeur de couplage énergétique en fonction des énergies de trames d'indice I;
   - vérification que, pour au moins M paires de trames consécutives, au moins un critère de stabilité de l'estimation du couplage est satisfait;
   - en fonction du résultat de ladite vérification, estimation du couplage énergétique entre le signal de référence et le signal d'écho, ladite estimation de couplage énergétique étant fonction des M valeurs de couplage énergétique des M paires de trames.

**2.** Procédé selon la revendication 1, **caractérisé en ce que** les instants d'échantillonnage ($t_1$-$t_{12}$) des signaux d'énergie sont obtenus par décimation des instants d'échantillonnage des signaux de référence (203) et d'écho (204) par un facteur de décimation d.

**3.** Procédé selon la revendication 1 ou 2, **caractérisé en ce que** les signaux d'énergie respectifs à un instant $t$ ($t_1$-$t_{12}$) sont déterminés par fenêtre glissante (202) en fonction des T échantillons du signal de référence, respectivement d'écho, précédant temporellement ledit instant $t$, T étant une taille prédéterminée de fenêtre glissante.

**4.** Procédé selon l'une des revendications précédentes, **caractérisé en ce que** la vérification qu'au moins un critère de stabilité de l'estimation du couplage est satisfait comprend les étapes suivantes :

- détermination de la valeur maximale parmi les M valeurs de couplage énergétique des M paires de trames,
- détermination de la valeur minimale parmi les M valeurs de couplage énergétique desdites M paires de trames,
- comparaison du rapport de ladite valeur maximale sur ladite valeur minimale avec un seuil prédéterminé,

et **en ce que**, si ledit rapport est inférieur au seuil prédéterminé, un critère de stabilité énergétique de l'estimation du couplage est satisfait et l'estimation du couplage énergétique est déterminée en fonction des M valeurs de couplage énergétique.

**5.** Procédé selon l'une des revendications 1 à 4, **caractérisé en ce que**, pour chaque trame d'indice I du signal de référence, l'énergie de trame est égale à l'énergie maximale de la trame d'indice I du signal de référence, correspondant à un instant $k_{max1}$.

**6.** Procédé selon la revendication 5, **caractérisé en ce que** l'énergie de trame de la trame d'indice I du signal d'écho est égale à l'énergie du signal d'écho à l'instant $k_{max1}$.

**7.** Procédé selon la revendication 5, **caractérisé en ce que** l'énergie de trame de la trame d'indice I du signal d'écho est égale à l'énergie maximale de la trame d'indice I du signal d'écho correspondant à un instant $k_{max2}$.

**8.** Procédé selon la revendication 7, **caractérisé en ce que** l'instant $k_{max2}$ est obtenu par recherche de l'énergie maximale parmi les énergies aux instants postérieurs à l'instant $k_{max1}$.

**9.** Procédé selon l'une des revendications précédentes, **caractérisé en ce que** la vérification qu'au moins un critère de l'estimation du couplage est satisfait comprend les étapes suivantes :

- pour chaque paire de trames parmi les M paires de trames, déterminer une latence (209) correspondant à la différence entre un instant $k_{max1}$ d'énergie maximale de la trame du signal de référence et un instant $k_{max2}$ d'énergie maximale de la trame du signal d'écho,
- détermination de la valeur maximale parmi les M latences des M paires de trames,
- détermination de la valeur minimale parmi les M latence desdites M paires de trames
- comparaison de la différence entre ladite valeur maximale et ladite valeur minimale avec un seuil prédéterminé,

et **en ce que**, si ladite différence est inférieure au seuil prédéterminé, un critère de stabilité temporelle de l'estimation du couplage est satisfait et l'estimation du couplage énergétique est déterminée en fonction des M valeurs de couplage énergétique.

**10.** Procédé selon les revendications 4 et 9, **caractérisé en ce que** les critères de stabilité temporelle et énergétique sont tous deux pris en compte au moyen d'un classificateur Bayésien ou d'une Chaîne de Markov Cachée à plusieurs observations, afin de déterminer la validité de l'estimation du couplage énergétique entre le signal de référence et le signal d'écho.

**11.** Procédé selon l'une des revendications précédentes, **caractérisé en ce que** l'estimation du couplage énergétique entre le signal de référence (203) et le signal d'écho (204) est déterminée à partir de l'une des fonctions suivantes :

- la moyenne des M valeurs de couplage énergétique des M paires de trames ;
- la moyenne logarithmique des M valeurs de couplage énergétique des M paires de trames ;
- la moyenne de la norme 2 des M valeurs de couplage énergétique des M paires de trames ; ou
- la médiane des M valeurs de couplage énergétique des M paires de trames.

**12.** Produit programme d'ordinateur comprenant des instructions de code de programme enregistrées sur un support lisible par un ordinateur, pour l'exécution par un processeur des étapes du procédé selon l'une quelconques des revendications 1 à 11.

**13.** Dispositif d'estimation d'un couplage énergétique entre un signal de référence (203) échantillonné et un signal d'écho (204) échantillonné, **caractérisé en ce que** le dispositif comprend:

- une première unité de détermination (13) d'un signal d'énergie du signal de référence sur un ensemble d'instants $(t_1-t_{12})$ prédéterminés et d'un signal d'énergie du signal d'écho aux instants prédéterminés;
- une unité de décomposition (14) des signaux d'énergie respectifs en trames (201.01 ;201.11 ;201.02 ;201.12) d'indice I, de L échantillons;
- une seconde unité de détermination (15), pour les trame respectives d'indice I, d'une énergie de trame en fonction des L échantillons de la trame ;
- une troisième unité de détermination (16), pour chaque paire de trames d'indice I, d'une valeur de couplage énergétique en fonction des énergies de trames d'indice I ;
- une unité de vérification (17) que, pour au moins M paires de trames consécutives, au moins un critère de stabilité de l'estimation du couplage est satisfait;
- une quatrième unité de détermination (18), en fonction du résultat de ladite vérification, de l'estimation du couplage énergétique entré le signal de référence et le signal d'écho, ladite estimation de couplage énergétique étant fonction des M valeurs de couplage énergétique des M paires de trames.

**14.** Terminal mobile de télécommunications comprenant un dispositif d'estimation (6 ;7) d'un couplage énergétique entre un signal de référence (203) échantillonné et un signal d'écho (204) échantillonné selon la revendication 13.

**Patentansprüche**

**1.** Verfahren zur Schätzung einer energetischen Kopplung zwischen einem abgetasteten Bezugssignal (203) und einem abgetasteten Echosignal (204), **dadurch gekennzeichnet, dass** das Verfahren die folgenden Schritte enthält:

- Bestimmen eines Energiesignals des Bezugssignals über eine Gruppe von vorbestimmten Zeitpunkten $(t_1-t_{12})$ und eines Energiesignals des Echosignals zu den vorbestimmten Zeitpunkten;
- Zerlegen der jeweiligen Energiesignale in Rahmen (201.01; 201.11; 201.02; 201.12) mit dem Index I von L Tastproben (205.1-205.6; 206.1-206.6);
- Bestimmen, für die jeweiligen Rahmen mit dem Index I, einer Rahmenenergie abhängig von den L Tastproben des Rahmens;
- für jedes Paar von Rahmen mit dem Index I, Bestimmen eines energetischen Kopplungswerts abhängig von den Rahmenenergien mit dem Index I;
- Prüfen, dass für mindestens M aufeinanderfolgende Rahmenpaare mindestens ein Stabilitätskriterium der Schätzung der Kopplung erfüllt ist;
- abhängig vom Ergebnis der Prüfung, Schätzen der energetischen Kopplung zwischen dem Bezugssignal und dem Echosignal, wobei die Schätzung der energetischen Kopplung von den M energetischen Kopplungswerten der M Rahmenpaare abhängt.

**2.** Verfahren nach Anspruch 1, **dadurch gekennzeichnet, dass** die Abtastzeitpunkte $(t_1-t_{12})$ der Energiesignale durch Dezimierung der Abtastzeitpunkte der Bezugs- (203) und Echosignale (204) durch einen Deziminierungsfaktor d erhalten werden.

**3.** Verfahren nach Anspruch 1 oder 2, **dadurch gekennzeichnet, dass** die jeweiligen Energiesignale zu einem Zeitpunkt t $(t_1-t_{12})$ durch ein gleitendes Fenster (202) abhängig von den T Tastproben des Bezugs- bzw. Echosignals bestimmt werden, das zeitlich vor dem Zeitpunkt t liegt, wobei T eine vorbestimmte Größe des gleitenden Fensters ist.

**4.** Verfahren nach einem der vorhergehenden Ansprüche, **dadurch gekennzeichnet, dass** die Prüfung, dass mindestens ein Stabilitätskriterium der Schätzung der Kopplung erfüllt ist, die folgenden Schritte enthält:

- Bestimmen des maximalen Werts unter den M energetischen Kopplungswerten der M Rahmenpaare,
- Bestimmen des minimalen Werts unter den M energetischen Kopplungswerten der M Rahmenpaare,
- Vergleichen des Verhältnisses des maximalen Werts zum minimalen Wert mit einer vorbestimmten Schwelle,

und dass, wenn das Verhältnis unter der vorbestimmten Schwelle liegt, ein energetisches Stabilitätskriterium der Schätzung der energetischen Kopplung erfüllt ist, und die Schätzung der energetischen Kopplung abhängig von den M energetischen Kopplungswerten bestimmt wird.

5. Verfahren nach einem der Ansprüche 1 bis 4, **dadurch gekennzeichnet, dass** für jeden Rahmen mit dem Index I des Bezugssignals die Rahmenenergie gleich der maximalen Energie des Rahmens mit dem Index I des Bezugssignals entsprechend einem Zeitpunkt $k_{max1}$ ist.

6. Verfahren nach Anspruch 5, **dadurch gekennzeichnet, dass** die Rahmenenergie des Rahmens mit dem Index I des Echosignals gleich der Energie des Echosignals zum Zeitpunkt $k_{max1}$ ist.

7. Verfahren nach Anspruch 5, **dadurch gekennzeichnet, dass** die Rahmenenergie des Rahmens mit dem Index I des Echosignals gleich der maximalen Energie des Rahmens mit dem Index I des Echosignals entsprechend einem Zeitpunkt $k_{max2}$ ist.

8. Verfahren nach Anspruch 7, **dadurch gekennzeichnet, dass** der Zeitpunkt $k_{max2}$ durch Suche der maximalen Energie unter den Energien zu den Zeitpunkten nach dem Zeitpunkt $k_{max1}$ erhalten wird.

9. Verfahren nach einem der vorhergehenden Ansprüche, **dadurch gekennzeichnet, dass** die Prüfung, dass mindestens ein Kriterium der Schätzung der Kopplung erfüllt ist, die folgenden Schritte enthält:

   - für jedes Rahmenpaar unter den M Rahmenpaaren, Bestimmen einer Latenz (209) entsprechend der Differenz zwischen einem Zeitpunkt $k_{max1}$ maximaler Energie des Rahmens des Bezugssignals und einem Zeitpunkt $k_{max2}$ maximaler Energie des Rahmens des Echosignals,
   - Bestimmen des maximalen Werts unter den M Latenzen der M Rahmenpaare,
   - Bestimmen des minimalen Werts unter den M Latenzen der M Rahmenpaare,
   - Vergleichen der Differenz zwischen dem maximalen Wert und dem minimalen Wert mit einer vorbestimmten Schwelle,

   und dass, wenn die Differenz niedriger ist als die vorbestimmte Schwelle, ein zeitliches Stabilitätskriterium der Schätzung der Kopplung erfüllt ist, und die Schätzung der energetischen Kopplung abhängig von den M energetischen Kopplungswerten bestimmt wird.

10. Verfahren nach den Ansprüchen 4 und 9, **dadurch gekennzeichnet, dass** die zeitlichen und energetischen Stabilitätskriterien beide mittels eines Bayes-Klassifikators oder einer versteckten Markov-Kette mit mehreren Beobachtungen berücksichtigt werden, um die Gültigkeit der Schätzung der energetischen Kopplung zwischen dem Bezugssignal und dem Echosignal zu bestimmen.

11. Verfahren nach einem der vorhergehenden Ansprüche, **dadurch gekennzeichnet, dass** die Schätzung der energetischen Kopplung zwischen dem Bezugssignal (203) und dem Echosignal (204) ausgehend von einer der folgenden Funktionen bestimmt wird:

   - dem Mittelwert der M energetischen Kopplungswerte der M Rahmenpaare;
   - dem logarithmischen Mittelwert der M energetischen Kopplungswerte der M Rahmenpaare;
   - dem Mittelwert der Norm 2 der M energetischen Kopplungswerte der M Rahmenpaare; oder
   - dem Medianwert der M energetischen Kopplungswerte der M Rahmenpaare.

12. Computerprogrammprodukt, das Programmcodeanweisungen enthält, die auf einem computerlesbaren Träger aufgezeichnet sind, zur Ausführung der Schritte des Verfahrens nach einem der Ansprüche 1 bis 11 durch einen Prozessor.

13. Vorrichtung zur Schätzung einer energetischen Kopplung zwischen einem abgetasteten Bezugssignal (203) und einem abgetasteten Echosignal (204), **dadurch gekennzeichnet, dass** die Vorrichtung enthält:

   - eine erste Bestimmungseinheit (13) eines Energiesignals des Bezugssignals über eine Gruppe von vorbestimmten Zeitpunkten ($t_1$-$t_{12}$) und eines Energiesignals des Echosignals zu den vorbestimmten Zeitpunkten;
   - eine Zerlegungseinheit (14) der jeweiligen Energiesignale in Rahmen (201.01; 201.11; 201.02; 201.12) mit dem Index I von L Tastproben;

- eine zweite Bestimmungseinheit (15) für die jeweiligen Rahmen mit dem Index I einer Rahmenenergie abhängig von den L Tastproben des Rahmens;
- eine dritte Bestimmungseinheit (16) für jedes Rahmenpaar mit dem Index I eines energetischen Kopplungswerts abhängig von den Energien von Rahmen mit dem Index I;
- eine Einheit zum Prüfen (17), dass für mindestens M aufeinanderfolgende Rahmenpaare mindestens ein Stabilitätskriterium der Schätzung der Kopplung erfüllt ist;
- eine vierte Bestimmungseinheit (18), abhängig vom Ergebnis der Prüfung, der Schätzung der energetischen Kopplung zwischen dem Bezugssignal und dem Echosignal, wobei die Schätzung der energetischen Kopplung von den M energetischen Kopplungswerten der M Rahmenpaare abhängt.

**14.** Mobiles Telekommunikations-Endgerät, das eine Schätzvorrichtung (6; 7) einer energetischen Kopplung zwischen einem abgetastetem Bezugssignal (203) und einem abgetasteten Echosignal (204) nach Anspruch 13 enthält.

## Claims

**1.** Method for estimating an energy-related coupling between a sampled reference signal (203) and a sampled echo signal (204), **characterized in that** the method comprises the following steps:

- determination of an energy signal of the reference signal over a set of predetermined instants ($t_1$-$t_{12}$) and of an energy signal of the echo signal at the predetermined instants;
- decomposition of the respective energy signals into frames (201.01; 201.11; 201.02; 201.12) of index I of L samples (205.1-205.6; 206.1-206.6);
- determination, for the respective frames of index I, of a frame energy dependent on the L samples of the frame;
- for each pair of frames of index I, determination of a value of energy-related coupling as a function of the energies of frames of index I;
- verification that, for at least M pairs of consecutive frames, at least one criterion of stability of the estimation of the coupling is satisfied;
- as a function of the result of the said verification, estimation of the energy-related coupling between the reference signal and the echo signal, the said estimation of energy-related coupling being dependent on the M values of energy-related coupling of the M pairs of frames.

**2.** Method according to Claim 1, **characterized in that** the sampling instants ($t_1$-$t_{12}$) for the energy signals are obtained by decimation of the sampling instants for the reference signals (203) and for the echo signals (204) by a decimation factor d.

**3.** Method according to Claim 1 or 2, **characterized in that** the respective energy signals at an instant t ($t_1$-$t_{12}$) are determined by sliding window (202) as a function of the T samples of the reference signal, respectively of the echo signal, temporally preceding the said instant *t*, T being a predetermined size of sliding window.

**4.** Method according to one of the preceding claims, **characterized in that** the verification that at least one criterion of stability of the estimation of the coupling is satisfied comprises the following steps:

- determination of the maximum value among the M values of energy-related coupling of the M pairs of frames,
- determination of the minimum value among the M values of energy-related coupling of the said M pairs of frames,
- comparison of the ratio of the said maximum value to the said minimum value with a predetermined threshold, and **in that**, if the said ratio is below the predetermined threshold, a criterion of energy-related stability of the estimation of the coupling is satisfied and the estimation of the energy-related coupling is determined as a function of the M values of energy-related coupling.

**5.** Method according to one of Claims 1 to 4, **characterized in that**, for each frame of index I of the reference signal, the frame energy is equal to the maximum energy of the frame of index I of the reference signal, corresponding to an instant $k_{max1}$.

**6.** Method according to Claim 5, **characterized in that** the frame energy of the frame of index I of the echo signal is equal to the energy of the echo signal at the instant $k_{max1}$.

**7.** Method according to Claim 5, **characterized in that** the frame energy of the frame of index I of the echo signal is equal to the maximum energy of the frame of index I of the echo signal corresponding to an instant $k_{max2}$.

8. Method according to Claim 7, **characterized in that** the instant $k_{max2}$ is obtained by searching for the maximum energy among the energies at the instants posterior to the instant $k_{max1}$.

9. Method according to one of the preceding claims, **characterized in that** the verification that at least one criterion of the estimation of the coupling is satisfied comprises the following steps:

   - determining, for each pair of frames among the M pairs of frames, a latency (209) corresponding to the difference between an instant $k_{max1}$ of maximum energy of the frame of the reference signal and an instant $k_{max2}$ of maximum energy of the frame of the echo signal,
   - determination of the maximum value among the M latencies of the M pairs of frames,
   - determination of the minimum value among the M latency of the said M pairs of frames
   - comparison of the difference between the said maximum value and the said minimum value with a predetermined threshold,

   and **in that**, if the said difference is below the predetermined threshold, a criterion of time-related stability of the estimation of the coupling is satisfied and the estimation of the energy-related coupling is determined as a function of the M values of energy-related coupling.

10. Method according to Claims 4 and 9, **characterized in that** the criteria of time-related and energy-related stability are both taken into account by means of a Bayesian classifier or of a Hidden Markov Chain with several observations, so as to determine the validity of the estimation of the energy-related coupling between the reference signal and the echo signal.

11. Method according to one of the preceding claims, **characterized in that** the estimation of the energy-related coupling between the reference signal (203) and the echo signal (204) is determined on the basis of one of the following functions:

   - the mean of the M values of energy-related coupling of the M pairs of frames;
   - the logarithmic mean of the M values of energy-related coupling of the M pairs of frames;
   - the mean of the norm 2 of the M values of energy-related coupling of the M pairs of frames; or
   - the median of the M values of energy-related coupling of the M pairs of frames.

12. Computer program product comprising program code instructions recorded on a medium readable by a computer, for the execution by a processor of the steps of the method according to any one of Claims 1 to 11.

13. Device for estimating an energy-related coupling between a sampled reference signal (203) and a sampled echo signal (204), **characterized in that** the device comprises:

   - a first determination unit (13) for determining an energy signal of the reference signal over a set of predetermined instants ($t_1$-$t_{12}$) and of an energy signal of the echo signal at the predetermined instants;
   - a decomposition unit (14) for decomposing the respective energy signals into frames (201.01; 201.11; 201.02; 201.12) of index I, of L samples;
   - a second determination unit (15) for determining, for the respective frames of index I, a frame energy as a function of the L samples of the frame;
   - a third determination unit (16) for determining, for each pair of frames of index I, a value of energy-related coupling as a function of the energies of frames of index I;
   - a verification unit (17) for verifying that, for at least M pairs of consecutive frames, at least one criterion of stability of the estimation of the coupling is satisfied;
   - a fourth determination unit (18) for determining, as a function of the result of the said verification, the estimation of the energy-related coupling between the reference signal and the echo signal, the said estimation of energy-related coupling being dependent on the M values of energy-related coupling of the M pairs of frames.

14. Mobile telecommunications terminal comprising a device (6;7) for estimating an energy-related coupling between a sampled reference signal (203) and a sampled echo signal (204) according to Claim 13.

FIG. 1

FIG. 2

FIG. 3

EP 2 680 263 B1

FIG. 4

ENER — 51

FRAME — 52

FR_ENER — 53

COUPL — 54

55
STAB ? —N→ END 56

Y

ESTIM — 57

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE BENESTY ; JACOB, MORGAN ; DENNIS R. ET CHO ; JUN H.** A New Class of Doubletalk Detectors Based on Cross-Correlation. *IEEE TRANSACTIONS ON SPEECH AND AUDIO PROCESSING,* vol. 8

- **GÄNSLER ; THOMAS et al.** A Double-Talk Detector Based on Coherence. *IEEE TRANSACTIONS ON COMMUNICATIONS,* 1996, vol. 44
- **DE HAYKIN.** Adaptive Filter Theory. Prentice Hall-Englewood, 1986
- *A New Class of Doubletalk Detectors Based on Cross-Correlation*